# EUROPEAN PATENT APPLICATION

(11) **EP 1 595 931 A1**
(43) Date of publication of application: **16.11.2005**
(21) Application number: 04706296.3
(22) Date of filing: 29.01.2004
(51) Int. Cl.: C09K 3/16, C08L 25/00, C08L 67/00, C08L 69/00, C08L 71/12

(54) **ANTISTATIC AGENT AND COATING OR MOLDING SYNTHETIC RESINS**

(30) Priority: 30.01.2003 JP 2003021658; 12.06.2003 JP 2003167296
(71) Applicant: Suzuka Fuji Xerox Co., Ltd., Suzuka-shi, Mie 519-0393 (JP)
(72) Inventor: SUZUKI, Yasuhiro, Suzuka Fuji Xerox Co., Ltd., Suzuka-shi, Mie 519-0393 (JP)
(74) Representative: Vossius & Partner
(86) International application number: PCT/JP2004/000876
(87) International publication number: WO 2004/067669

(57) **Abstract**

The object of the present invention is to provide an antistatic agent used for thermoplastic resin having aromatic ring(s) such as a styrene group resin, polyester resin, or the like A graft copolymer whose main chain is acrylic rubber and graft chain is of a polymer chain mainly consisting of a styrene group monomer or copolymer chain mainly consisting of a styrene group monomer and nitrile group monomer is used as said antistatic agent. Besides said graft copolymer, antistatic properties are is given to said thermoplastic resin by blending said thermoplastic resin with a compound having a hydrophilic group so as to be a blend polymer or a polymer alloy. Further, antistatic properties are given to a resin molded article by coating it with a paint containing hydrophilic polymer.

## Description

### FIELD OF THE INVENTION

The present invention relates to an antistatic agent which is mainly mixed into synthetic resin for molding or in paint, to prevent the electrification of molded article. Further, the present invention relates to a synthetic resin compound used for molding or in paint.

### BACKGROUND OF THE INVENTION

Hitherto, as an antistatic agent, which is mixed into a synthetic resin for molding, a surface active agent, containing such as carboxylic acid salt, sulfonic acid salt(see for example Patent Literature 1), quaternary ammonium salt (see for example Patent Literature 2), phosphate, or the like, and an inorganic compound, such as carbon block (see for example Patent Literatures 3 and 4), metal oxide (see for example Patent Literature 5), alkaline metal salt (see for example Patent Literature 6) and the like, have been used.
Patent Literature 1
   Publication Tokkaihei 10-287814
Patent Literature 2
   Publication Tokkaihei 6-100522
Patent Literature 3
   Publication Tokkaihei 7-207141
Patent Literature 4
   Publication Patent 2663592
Patent Literature 5
   Publication Tokkaihei 9-183865
Patent Literature 6
   Publication Patent 3060127
Patent Literature 7
   International Publication WO 00/5384
Patent Literature 8
   Publication Tokkai 2002-105332

Said surface active agent has faults in that it is apt to bleed out of the surface of the molded article, so that said antistatic surface active agent has a poor durability, and further, in a case where scraps of a molded article containing said surface active agent are incinerated, it is feared that poisonous gas will be produced.

Further, in a case where said surface active agent is added to the resin, it is also feared that properties of the resin, such as water resistance, chemical resistance, mechanical strength and the like will be degraded

Further, in a case of the resin, into which rubber in whose main chain unsaturated bond(s) is (are) contained (such as butadiene group rubber) is compounded (such as ABS, HIPS, modified PPE), the physical properties of the resin may degrade remarkably in repeated recycles(see for example Patent Literatures 7 and 8).

Said inorganic compounds as described above, such as carbon block, metal oxide, and the like, are effectively antistatic when said inorganic compounds are used in a large amount, but since said inorganic compounds have incompatibility with the resin to which said inorganic compounds are added, said inorganic compounds retard the fluidity of the melting of the resin when said inorganic compounds are added to the resin in a large amount, degrading its moldability. Further, since carbon or metal oxide colors the resin molded article, so that it may be difficult to color said resin molded article as desired.

### DISCLOSURE OF THE INVENTION

To solve the aforementioned problems of the prior art, the present invention provides an antistatic agent made of one or a mixture of two or more kinds selected from a group consisting of a graft copolymer, whose main chain is an acrylic rubber and graft chain is of a polymer chain mainly consisting of a styrene group monomer or a copolymer chain mainly consisting of a styrene group monomer and nitrile group monomer, a block copolymer consisting of acrylic rubber block(s) and styrene group polymer block(s), or styrene group and nitrile group copolymer block(s), a cellulose derivative except nitrocellulose, a phosphoric ester compound, polyester, polycarbonate, phatalic acid ester, and adipic acid ester.

Commonly, said antistatic agent is added to thermoplastic resin having aromatic ring(s), and in this case, said thermoplastic resin having aromatic ring(s) may be a styrene group resin, polyester resin, polyphenylene ether resin or polycarboneite resin.

Further, the present invention provides a synthetic resin used in paint or for molding, containing 5 to 50% by mass of a graft copolymer, whose main chain is an acrylic rubber, and graft chain is of a polymer chain mainly consisting of styrene group monomer, or a copolymer chain mainly consisting of a styrene group monomer and nitrile group monomer as an antistatic agent, or a synthetic resin compound used in paint or for molding containing 5 to 50% by mass of a block copolymer containing acrylic rubber block(s), and polymer block(s) mainly consisting of a styrene group monomer or copolymer block(s) mainly consisting of a styrene group monomer and nitrile monomer as an antistatic agent.

Still further, the present invention provides a synthetic resin compound used in paint or for molding containing 5% by mass of a cellulose derivative except nitrocellulose as an antistatic agent.

Still further, the present invention provides a synthetic resin compound used in paint or for molding containing 5 to 35% by mass of a phosphoric ester compound as an antistatic agent.

Still further, the present invention provides a synthetic resin compound, used in paint or for molding, containing 5 to 35% by mass of an antistatic agent made of a mixture of a graft copolymer, whose main chain is an acrylic rubber and graft chain is of a polymer chain mainly consisting of a styrene group monomer or a copolymer chain mainly consisting of a styrene group monomer and nitrile group monomer, and phosphoric ester, wherein said graft copolymer and said phosphoric ester are mixed in a mass ratio in the range of between 10 : 90 and 50 : 50, or a synthetic resin compound, used in paint or for molding, containing 5 to 35% by mass of an antistatic agent made of a mixture of a block copolymer consisting of acrylic rubber block(s), and polymer block(s) mainly consisting of a styrene group monomer or copolymer block(s) mainly consisting of a styrene group monomer and nitrile monomer, and phosphoric ester, wherein said block copolymer and said phosphoric ester are mixed in a mass ratio in the range of between 10 : 90 and 50 : 50.

Commonly, said synthetic resin is a thermoplastic resin having aromatic ring(s), and in this case said thermoplastic resin having aromatic ring(s) may be a styrene group resin, polyester resin, polyphenylene ether resin or polycarbonate resin.

### (Action)

Said graft copolymer whose main chain is an acrylic rubber and graft chain is of a polymer chain mainly consisting of a styrene group monomer or a copolymer chain mainly consisting of a styrene group monomer and nitrile group monomer as an antistatic agent, or said block copolymer consisting of acryl rubber block(s) and styrene group polymer block(s) or styrene group and nitrile group copolymer block(s) as an antistatic agent, has compatibility with the objective synthetic resin, particularly having a polymer chain the same as or similar to a polymer chain mainly consisting of a styrene group monomer, or a styrene group monomer and nitrile group monomer, and said antistatic agent is uniformly mixed into said resin, to exercise its durable antistatic effect.

Further, said antistatic agent does not separate from said resin, so that said antistatic agent does not degrade the mechanical strength of said resin.

Said antistatic agent of the present invention, containing an acrylic rubber as a main component, has excellent flexibility and durability, so that in a case where said antistatic agent is added to said resin, its mechanical properties such as impact resistance may be improved. Further, said antistatic agent containing an acrylic rubber has a good heat stability, so that the antistatic effect and rubber-like properties, and the like, are maintained in said antistatic agent after repeated recyclings.

### (Effect of the Invention)

Said antistatic agent of the present invention prevents the electrification of the objective resin without degrading its mechanical properties, such as impact resistance and the like.

### PREFERED EMBODIMENT

The present invention is described precisely below.

The polymer used in said antistatic agent is an acrylic rubber. Said acrylic rubber may be such as a homopolymer of acrylic ester, whose alkyl group has desirably 2 to 8 carbon atoms, said acrylic ester being such as ethyl acrylate, n-butyl acrylate, 2-ethyl-hexyl acrylate and the like, or a copolymer of two or more kinds of said acrylic ester together or a copolymer of one or more kind(s) of said acrylic ester(s), and one or more kind(s) of other monomer(s), such as butadiene or a non-conjugated diene compound such as dicyclopentadiene, tricyclopentadiene, 5-methyl-2,5-norbornadiene, 5-methylene-2-norbornene, 5-vinyl-2-norbornene, 5-ethylidene-2-norbornene, 5-isopropylidene-2-norbornene, 5-isopropenyl-2-norbornene, 5-(1-butenyl)-2-norbornene, 5-(2-propenyl)-2-norbornene, 5-(5-hexenyl)-2-norbornene, 4,7,8,9-tetrahydro-indene, isopropylidenetetrahydroindene-indene, cyclooctadiene, vinylcyclohexene, 1,5,9-cyclododecatoluene, 6-methyl-4,7,8,9-tetrahydroindene, 2,2'-dicyclopentenyl, trans-1,2-divinylcyclobutane, 1,4-hexadiene, 2-methyl-1,4-hexadiene, 1,6-octadiene, 1,7-octadiene, 1,8-nonadiene, 1,9-decadiene, 3,6-dimethyl-1,7-octadiene, 4,5-dimethyl-1,7-octadiene, 1,4,7-octatriene, 5-methyl-1,8-nonadiene and the like, acrylonitrile, methyl methacrylate, vinyl acetate, styrene, ethylene, propylene and the like, and further said copolymer includes a copolymer of one or more kind(s) of said acrylic ester(s) and one or more kind(s) of other monomer(s) such as a monomer having a functional group, said monomer being such as an acrylic acid, methacrylic acid, β-hydroxyethyl methacrylate, acrylamide, dimethylaminoethyl methacrylate and the like, a polymerizable silane coupling agent such as γ-methacryloxypropyltrimethoxysilane, vinyltriacetoxysilane, p-trimethoxysilylstyrene, p-triethoxysilylstyrene, p-trimethoxysilyl-α-methylstyrene, p-triethoxysilyl-α-methylstyrene, γ-acryloxypropyltrimethoxysilane, vinyltrimethoxysilane, N-β(N-vinylbenzylaminoethyl-γ-aminopropyl)trimethoxysilane hydrochloride and the like.

As a general purpose acrylic rubber may be such as polyn-butyl acrylate, polyethyl acrylate in which a few monomer(s) having functional group as described above is(are) copolymerized, n-butyl acrylate - acrylonitrile copolymer, n-butyl acrylate - butadiene copolymer, n-butyl acrylate - ethylene copolymer, n-butyl acrylate - γ-methacryloxypropyltrimethoxysilane copolymer, n-butyl acrylate - vinyltrimethoxysilane copolymer and the like, and a preferable acrylic rubber is n-butyl acrylate - butadiene copolymer whose molar ratio of n-butyl acrylate/butadiene is 70/30 or higher. Commonly, said acrylic rubber is produced by suspension polymerization, emulsion polymerization, or the like.

A styrene group monomer or styrene group monomer and nitrile group monomer is(are) graft copolymerized, and/or block copolymerized, and/or random copolymerized, to/with said acrylic rubber, to give compatibility with the objective resin, particularly having structure the same as or similar to polymer chain mainly consisting of a styrene monomer, or styrene monomer and nitrile monomer.

Said styrene group monomer graft copolymerized, and/or block copolymerized, and/or random copolymerized, to/with said acrylic rubber, is such as styrene, α-alkylmonovinylidene aromatic monomer (for example, α-methylstyrene, α-ethylstyrene, α-methyl vinyl toluene, α-methyldialkylstyrene and the like), nuclear substituted alkylstyrene (for example, o-, m- or p-vinyltoluene, o-ethylstyrene, p-ethylstyrene, 2,4-dimethylstyrene, p-t-butylstyrene and the like), nuclear substituted halostyrene (for example, o-chlorostyrene, p-chlorostyrene, o-bromostyrene, 2,4-dichlorostyrene and the like), a nucleic substituted styrene with an alkyl group and halogen (for example, 2-chloro-4-methylstyrene, 2,6-dichlorostyrene and the like), vinylnaphthalene, vinylanthracene and the like, and said styrene group monomer may be used alone or a mixture of two or more kinds of said styrene monomer(s) may be used.

Generally, an alkyl substituent has 1 to 4 carbon atoms, and includes both linear and branched alkyl groups.

Nitrile monomer which is graft copolymerized and/or block copolymerized and/or random copolymerized to/with said acrylic rubber together with said styrene group monomer is such as methacrylonitrile, ethacrylonitrile, fumaronitrile and the like and a mixture of two or more kinds of said nitrile group monomers.

In addition to said styrenic monomer and said nitrile monomer, other monomers such as olefin group monomer such as ethylene, propylene, ethylene - vinyl acetate copolymer and the like, diene group monomer such as isoprene, chloroprene, butadiene and the like, vinyl ether group monomer such as methyl vinyl ether, ethyl vinyl ether, n-propyl vinyl ether, n-butyl vinyl ether and the like may also be copolymerized.

As said antistatic agent of the present invention, polyester represented by such as a polyethylene terephthalate (PET), polybutylene terephthalate (PBT) and polybutylene naphthalate (PEN), polycarboxylic acid ester represented by polycarbonate (PC), polyamide resin, EVA or EEA, ethylene vinyl alcohol copolymer (EVOH), thermoplastic polyurethane elastomer made of polyester or polyether as raw material, polyester group or polyamide group thermoplastic elastomer, a biodegradable resin such as polylactic acid, a highly water absorbent resin represented by such as ARASOAP, KI gel, Aquakeep, Lanseal,

F AQUAPEARL (all being trade names) and the like.

In addition, as the antistatic agent of the present invention, the compound described below may be used. Said compound may be a phosphate or phosphorus compound such as tricresyl phosphate, diphenylcresyl phosphate, trioctyl phosphate, tributyl phosphate, triphenyl phosphate, tris(chloroethyl) phosphate, tris(monochloropropyl) phosphate, tris(dichloropropyl) phosphate, triallyl phosphate, tris(3-hydroxypropyl) phosphineoxide, tris(tribromo) phosphate, tris β-chloropropyl phosphate, tris(dibromophenyl) phosphate, tris(tribromoneopentyl) phosphate, tetrakis(2-chloroethyl) phosphinate, dimethylethyl phosphinate tris (2-chloroethyl) o-phosphate, aromatic condensed phosphate (for example, PX-200, CR-733S, CR-735, Daihachi Chemical Industry Co., Ltd.), a halogen-containing condensed phosphate (for example, CR-505, CR509, CR-512, CR-380, CR-504, CR-507, CR-387, CR-106 and the like, Daihachi Chemical Industry Co., Ltd.), ethylene-bis-tris(2-cyanoethyl)phosphonium bromide, ammonium polyphoshate, β-chloroethyl acid phosphate, β-chloropropyl phosphate, butyl prophosphate, butyl acid phosphate, butoxyethyl acid phosphate, 2-ethylhexyl acid phosphate and the like, a melamine phosphate such as melamine phosphate, dimelamine phosphate, melamine borate, melamine cyanulate and the like, a phosphate (for example, K-19A, Mobil Chem), a phosphorus compound, a halogen-containing compound such as dibromoneopentyl glycol, 2,4,6-tribromophenol, tribromophenylallyl ether, tetrabromobisphenol A derivative (for example, Fire Guard 3000, 3100, 3200, 7000, 7500 and the like, Teijin, ANFLAME FSB-330, FSB-310 and the like, NOF Corporation, BA-50, BA-50P and the like, Great Lakes Chem.), tetrabromobisphenol S, tris-(2,3-dibromopropyl-1)-isocyanulate, poly(pentabromobenzyl/acrylate), tribromophenyl maleimide, tribromoneopentyl alcohol, tetraburomodipentaerythritol, pentabromobenzyl acrylate, pentabromophenol, pentaburomodiphenyl oxide, pentabromodiphenyl ether, octabromophenyl ether, octabromodiphenyl ether, octabromodiphenyl oxide, magnesium hydroxide, dibromoneopentyl glycol tetracarbonate, bis(tribromophenyl)phthalmaleimide, N-methylhexabromodiphenylamine, a halogen-containing phosphate, a brominated epoxy (for example, SR-SB, SR-TBA350, SR-TBA400, SR-TBA400T, SR-TNA400M, T-20000 and the like, Sakamoto Yakuhin Kogyo Co., Ltd., EPICHLON 152, 160, 165, 1120, Dainippon Ink Co., Ltd., BROMRITE BR-128, BR-156, BR-133, BR-140, BR343, Hitachi Chemical Co., Ltd, EBR-700, EBR-107, EB-242MT, EB-300, MANAC, F-2000, F-2300, F-2310, F-2400, F-2300H, F-2400E, F-2001, Dead Sea Bromine) and the like; CREINDIC anhydride, tetrabromophthalic anhydride, tetrabromobisphenol A, diethoxy-bis-(2-hydroxyethyl)amnomethyl phosphate, dibromocresylglycidyl ether, dibromophenol, dibromocresol, tribromophenol, phenyl phosphinic acid, phenylphosphinic dichloride, diethylphenyl phosphnate, dimethylphenyl phosphonate and the like. Generally any of these antistatic agents is used together with an antimony oxide such as an antimony trioxide, sodium antimonate, an inorganic compound such as aluminum hydroxide, magnesium hydroxide and zinc borate and the like.

Further, as said antistatic agent of the present invention, the compound described below may be used. Said compound may be such as a phthalic acid derivative, such as, dimethyl phthalate, diethyl phthalate, higher alcohol a phthalate, diisooctyl phthalate, benzyl phthalate, butylbenzyl phthalate, diisononyl phthalate, dinormalalkyl phthalate and the like, a tetrahydrophthalic acid derivative, an adipic acid derivative represented by such as dibutyl adipate, diethyl adipate, diisodecyl adipate, diisobutyl adipate, diisononyl adipate, diisooctyl adipate, dibutyl diglycol adipate and di-n-alkyl adipate, an azelaic acid derivative represented by such as a di-n-hexyl azelate, dimethyl azelate, dibenzyl azelate and the like, a sebacic acid derivative represented by such as di-n-butyl sebacate, dimethyl sebacate, dibutoxyethyl sebacate and the like, a dodecane diacid derivative, a maleic acid derivative represented by such as di-n-butyl maleate, dimethyl maleate and the like, a fumaric acid derivative represented by such as di-n-butyl fumarate, a trimellitic acid derivative represented by such as triisodecyltrimellitate, triisooctyl trimellitate and the like, and additionally a pyromellitic acid derivative, citric acid derivative, itaconic acid derivative, oleic acid derivative, stearic acid derivative, or fatty acid derivative represented by such as polyethylene glycol 200 monolaurate, polyethylene glycol 400 monolaurate, aliphatic dibasic acid ester and the like, a sulfonic acid derivative represented by such as a phenolic alkyl sulfonate, N,N-benzeneslfonamide and the like, a phosphoric acid derivative represented by such as trimethyl phosphate, triethyl phosphate, tributyl phosphate, tri(2-ethylhexyl)phosphate, triphenyl phosphate, diisodecyldiphenyl phosphate, tricresyl phosphate, trixylenyl phosphate, alkylallyl phosphate, tetrakis(2,4-di-t-butylphenyl)-4,4'-biphenylene diphosphonate and the like, a gurtaric acid derivative represented by such as didecyl gurtarate, dibutoxyethyl gurtarate and the like, a monoester represented by such as dipentaerythritol, aliphatic monocarboxylate and the like, a glycol derivative represented by such as polyethylene glycol, polyethylene glycol benzoate, a glyceric acid derivative represented by such as glycerol monoacetate, glycerol diacetate, glycerol triacetate and the like, a polyester group represented by such as adipic acid polyester, a sebacic acid-based polyester, adipic acid-1,3-butylglycol-based substance (for example, BAA-15 Daihachi Chemical Industry Co., Ltd.), polyester sebacate, polyether, ether thioether, ester thioester, stearic acid esteramide, phthalic acid-based ester and the like, further, a metal salt of a phosphite or stearic acid phosphate, an ester of amino acid and carboxylic acid and polyhydric acid, a benzenesulfonic acid salt of alkaline metal, an alkaline earth metal or other metals, montanic acid ester montanic acid salt of alkaline metal, alkaline earth metal or other metals, a stearic acid salt of alkaline metal, alkaline earth metal or other metals, a hydroxystearic acid, n-butyl stearate, a polyhydric alcohol fatty acid ester, a saturated fatty acid ester, an aromatic alcohol fatty acid ester, a higher alcohol, a higher alcohol ester (RIKEN VITAMINE, Henkel), a partial ester of a polyhydric alcohol with a fatty acid such as glycerin fatty acid ester stearic acid monoglyceride, linolic acid monoglyceride, carboxylate, a condensate of a fatty acid salt with a polyether, a sorbitan fatty acid ester, a fatty acid diethanolamide, methylmethacrylate butadiene styrene resin, an EVA-PVC-graft copolymer, acrylic resin, vinyl acetate - ethylene copolymer resin, xylene formaldehyde resin, a maleic anhydride modified polybutadiene resin, a compatibility aid agent (for example, MODIPER A4100, A5100, A6100, A8100, A1200, A4200, A5200, A6200, A8200, A4400, A5400, A6400, A8400, NOF Corporation), sodium polyacrylate, sodium polycarboxylate, alkylallyl sulfonate (for example, sodium dodecylbenzene sulfonate, sodium alkyldiphenylether disulfonate, alkylbenzene sulfonate, dodecylbenzene sulfonic acid amine salt and the like), a formalin condensate of alkylallylsulfonate, alkylsulfosuccinate, alkylsuofate salt, pentachlorophenol, a cellulose derivative (for example, cellulose nitrate, cellulose acetate, cellulose acetate acetate, methylcellulose methylhydroxyethyl cellulose, methylhydroxypropyl cellulose, hydroxyethyl cellulose and the like), a modified sodium polyacrylate, an ammonium polyacrylate, a partially saponified polyacrylate, a sodium polyacrylate/polyacrylic acid amide copolymer, a polyacrylamide, a carboxylated styrene butadiene polymer, a carboxylated vinyl polymer, a methylene vinyl ether maleic anhydride copolymer, a polyvinyl alcohol, a polyethylene glycol monostearate, a polyethylene glycol distearate, a polyethlene alkyl ether derivative and the like.

### [Objective resin]

The objective resin, into which said antistatic agent is added may be any kind of thermoplastic resin. A desirable thermoplastic resin is one having the same or a similar structure as/to a polymer chain consisting mainly of a styrene group monomer, or styrene group monomer and nitrile group monomer, and said thermoplastic resin may be such as a styrene group resin, polyphenylene ether group resin, polycarbonate resin, polyester resin, each of said resins having aromatic ring(s).

### [Styrenic group resin]

The styrenic group resin of the present invention is one containing at leaset more than 25% by mass of a styrene group monomer, said resin may include a homopolymer of a styrene group monomer or a copolymer of two or more kinds of styrene group monomer together, a copolymer of one or more kind(s) of styrene group monomer(s), and one or more kinds of the monomer(s) being copolymerizable with said styrene group resin, or a graft copolymer, in which one or more kind(s) of styrene group monomer(s) is (are) graft polymerized to a diene group rubber.

Further, said styrene group resin of the present invention includes a microblend or polymer blend of said styrene group resin and diene group resin and/or olefine group rubber and/or acrylic rubber.

A typical styrene group resin may be such as polystyrene(PS) which is homopolymer of styrene, high impact polystyrene(HIPS) which is a polymer blend of polystyrene and a rubbery polymer in which styrene is graft polymerized to a diene group rubber, acryronitrile/styrene copolymer (AS), styrene/butadiene copolymer, styrene/α-methylstyrene copolymer, styrene/maleic anhydride copolymer, styrene/methylmethacrylate copolymer, styrene /ethylene copolymer, styrene/ethylene/propylene/butadiene copolymer, ABS which is blend polymer of acrylonitrile•styrene copolymer and a graft polymer in which acrylonitrile and styrene are graft polymerized to butadiene rubber, ACS which is a resin mixture of chlorinated polyethylene and acrylonitrile-styrene copolymer, AES which is a resin mixture of acrylonitrile-styrene copolymer and acrylenitrile-styrene terpolymer containing an olefine group rubber in which acrylonitrile and styrene are graft polymerized to said olefine group rubber., AAS which is a resin mixture of acrylonitrile-styrene copolymer and acrylonitrile-styrene terpolymer containing an acrylic rubber in which acrylonitrile and styrene are graft polymerized to acrylic rubber, ASiS which is a resin mixture of acrylonitrile-dimethylsiloxane-styrene copolymer and acrylonitrile•butadiene• styrene copolymer.

### [Polyphenylene ether (PPE) group resin]

A typical PPE group resin of the present invention is poly (2,6-dimethyl-1,4-phenylene ether) produced by the oxidative polymerization of 2,6-xylenol with a copper a catalyst and further said PPE group resin of the present invention includes copolymer of 2,6-dimethyl-1,4-phemylene ether and 2,3,6-trimethyl-1,4-phenylene ether, and a copolymer of 2,6-dimethylphenol 2,3,6-trimethylphenol and the like.

Still further, said PPE group resin of the present invention includes a modified PPE produced by the modification of said PPE group resin with a styrene group resin and/or amide group resin.

### [Polycarbonate resins (PC resins)]

In the present invention, polycarbonate resin is singly used alone as a molding material or used as a polymer alloy or polymer blend by mixing it with said styrene group resin, PPE group resin, or the like.

Any kind of polycarbonate derived from an aromatic dihydroxy compound may be used as said PC resin (aromatic PC resin) of the present invention.

As said aromatic dihydroxy compound, for instance, 2,2-bis(4-hydroxyphenyl)propane (also referred to as bisphenol A), tetramethylbisphenol A, tetrabromobisphenol A, bis(4-hidroxyphenyl)-p-diisopropylbenzene, hydroquinone, resorcinol, 4,4'-dihydroxydiphenyl and the like, may be used, though generally bis(4-hydroxy phenyl) alkane group dihydroxy compound is selected, but bisphenol A, in particular, or combination of bisphenol A and another aromatic dihydroxy compound is preferable.

### [Polyester resin]

The polyester resin of the present invention is such as polybutylene terephthalate(PBT), polyethylene terephthalate(PET) and the like.

Said antistatic agent of the present invention is generally added to said objective resin in an amount of between 0.1 and 85% by mass, but preferably between 1 and 40% by mass.

In a case of an antistatic agent, which is a graft co-polymer having acrylic rubber as its main chain and a polymer chain mainly consisting of a styrene group monomer or a styrene group monomer and nitrile group monomer as its branch part, said antistatic agent is preferably contained in resin for paint, or resin for molding, in an amount of between 5 and 50% by mass.

Further, in a case of an antistatic agent, which is a block copolymer containing acrylic rubber block(s) and polymer block(s) mainly consisting of a styrene group monomer or copolymer block(s) mainly consisting of a styrene group monomer and nitrile group monomer, said antistatic agent is preferably contained in resin for paint, or resin for molding, in an amout of between 5 and 50% by mass.

Said antistatic agent of the present invention may be used by adding it to paint.

In a case where paint containing said antistatic agent is coated on a molded article, dust and the like are less likely attach to part(s) being coated with said paint, as well as the surrounding areas of said parts being coated.

In a case where said paint containing said antistatic agent of the present invention is coated on a molded article of said objective resin, acrylic resin or styrene modified acrylic resin is preferably used as a paint vehicle.

Said acrylic resin is a copolymer containing acrylic acid ester, and said styrene modified acrylic resin is a copolymer of styrene and acrylic acid ester.

Said acrylic acid ester, may include such as methyl acrylate, ethyl acrylate, n-propyl acrylate, isopropyl acrylate, n-butyl acrylate, isobutyl acrylate, t-butyl acrylate, 2-ethyl hexyl acrylate, cyclohexyl acrylate, tetrahydrofurfuryl acrylate and the like.

Further, methacrylate such as methyl methacrylate, ethyl methacrylate, n-propyl methacrylate, isopropyl methacrylate, n-butyl methacrylate, isobutylmethacrylate, 2-ethylhexyl methacrylate, cyclohexyl methacrylate, tetrahydrofurfuryl methacrylate, stearyl methacrylate, lauryl methacrylate or the like may be used in said acrylic resin.

In said styrene modified acrylic resin, other monomer(s) may be copolymerized in such an amount that the resulting resin does not lose compatibility with the thermoplastic resin of the molded article, and the like.

Other monomers described above may be such as vinyl ether such as methylvinyl ether, ethylvinyl ether, n-propylvinyl ether, n-butylvinyl ether, isobutylvinyl ether and the like, a nitrile-based monomer such as acrylonitrile, methacrylonitrile and the like, an aliphatic vinyl such as vinyl acetate, vinyl propionate and the like, an olefin such as ethylene, propylene and the like, a diene such as isoprene, chloroprene, butadiene and the like, an α, β-unsaturated carboxylic acid such as acrylic acid, methacrylic acid, itaconic acid, maleic acid, crotonic acid, atropic acid, citraconic acid and the like, hydroxyl group-containing monomer such as 2-hydroxylethyl methacrylate, 2-hydroxyethyl acrylate, 2-hydroxypropyl methacrylate, 2-hydroxtpropyl acrylate, allylalcohol and the like, an amide such as acrylamide, methacryklamide, diacetone acrylamide and the like, amino group-containing monomer such as dimethylaminomethyl methacrylate, dimethylaminoethyl methacrylate, dimethylaminopropyl acrylate and the like, epoxy group-containing monomer such as glycidyl acrylate, glycidyl methacrylate, glycidyl ether and the like, hydrolytic silyl group-containing vinyl monomer such as γ-methacryloxypropyl trimethoxysilane, vinylacetoxy silane, p-trimethoxysilylstyrene, p-triethoxysilylstyrene, p-trimethoxysilyl-α-methylstyrene, p-triethoxysilyl-α-methylstyrene, γ-acryloxypropyltrimethoxysilane, vinyltrimethoxysilane, N-β(N-vinylbenzylaminoethyl-γ-aminopropyl)trimethoxysilane hydrochloride and the like.

Said monomer may be used alone or two or more kinds of monomer(s) may be used together.

Further, a mixture of two or more kinds of paint vehicles which are of the same kind but each have different molecular weights may be used.

Said antistatic agent used as an additive in paint may be such as a cellulose and its derivative, such as methyl cellulose, ethyl cellulose, hydroxy cellulose, hydroxypropylmethy cellulose, hydroxyethylmethyl cellulose, acetic acid cellulose, cellulose acetate, acetyl cellulose, benzyl cellulose, cellulose acetate butyrate (CAB), cellulose nitrate (NC) or the like.

Said antistatic agent may be used alone or two or more kinds of said antistatic agent may be used together.

The optimum viscosity for the dispersion of said cellulose acetate butylate(optimum viscosity for the preparation of paint) is in the range of between 0.1 and 0.55 sec. , a lower viscosity than said optimum viscosity being caused by an excess of solvent. On the other hand, a higher viscosity than that of said optimum viscosity causes a problem in that cellulose acetate butylate is hard to disperse well.

Further, the acetyl group content of said cellulose acetate butylate is preferably in the range of between 0 and 15%. As the content of said acetyl group becomes greater, its grease resistance, tensile strength, hardness, melting point, and specific gravity rise accordingly. On the other hand, the optimum content of said butyrel group is in the range of between 30.0 and 55.0%. A higher content of said butyryl group than said optimum content improves solubility, dilution resistance, compatibility, softness and water resistance.

Said cellulose acetate is cellulose diacetate, and the acetylation degree of said cellulose acetate is in the range of between 50 and 60%, but preferably between 54 and 56%. In this range of said acetylation degree, said cellulose diacetate is soluble in an ester group solvent, ketone group solvent, a hi-solve acetate, and halogenated hydro carbon, said cellulose diacetate being easily dissolved in solvent during paint preparation.

The ethoxy group content of said ethyl cellulose is preferably in the range of between 45 and 50%. In a case where the ethoxy group content is within said range, said ethylcellulose has compatibility with the resin used in paint or printing ink.

The methoxy group content of said methyl cellulose is preferably in the range of between 19 and 31.5%. In a case where the methoxy group content is within said range said methylcellulose has high surface activity, excellent protective ability for hydrophobic colloid, and excellent ability to stabilize both suspension and emulsion.

The hydroxyl propoxy group content of said hydroxyl propylmethyl cellulose is preferably in the range of between 4 and 12%. In a case when the hydroxyl propoxy group content is within said range, said hydroxyl propylmethyl cellulose has excellent salt resistance, PH resistance and enzyme resistance.

The hydroxyl ethoxy group content of said hydroxyl ethylmethyl cellulose is preferably in the range of between 4 and 12%.

In a case where the hydroxy ethoxy group content is within said range, said hydroxyl ethyl methyl cellulose has excellent salt resistance, PH resistance, and enzyme resistance. Further, the viscosity of 2% by mass aqueous solution of said hydroxyl ethyl cellulose is in the range of between 20 and 100000cps(mPa•s).

In a case where cellulose acetate butylate is used in paint as an antistatic agent, pellets prepared by smashing a molded article onto which a coating film containing said cellulose acetate butylate is covered, and then pelletizing said smashed molded article by heating and melting, may not yellow.

An additional amount of said antistatic agent is set to be more than 5% by mass, but preferably 15% by mass in dry film. In a case where the addition amount of said antistatic agent is less than 5% by mass in said dry film, antistatic effect can not be expected.

In said antistatic agent of the present invention, a pigment, dye, reinforcing agent (glass fiber, carbon fiber and the like), filler (carbon black, silica, titanium oxide, talc and the like), heat resistant agent, anti-aging agent, an antioxidant, antiozonant, weatherproof (light stabilizing) agent (UV absorber, light stabilizer), plasticizer, foaming agent, foaming aid agent, lubricant, internal releasing agent, releasing agent, hazing proof agent, crystalline nucleus agent, flame retardant, flame retardation aid agent, fluidity modifier, compatibility aid agent or the like may be added in such an amount that the effect of said antistatic agent is not lost.

### [Synthetic resin for paint or molding]

A synthetic resin for paint or molding prepared by adding said static agent of the present invention into said objective resin has excellent antistatic properties.

As said synthetic resin, a synthetic resin having an aromatic ring(s) is preferable. Said synthetic resin having an aromatic ring(s) is such as a styrene group resin, polyester resin, polyphenylene ether resin, polycarbonate resin and the like.

In a case where a cellulose derivative is contained in said synthetic resin for paint or molding as an antistatic agent, the content of said cellulose derivative is preferably in the range of between 5 and 35% by mass.

Further, in a case where phosphate is contained in said synthetic resin for paint or molding as antistatic agent, the content of said phosphate is preferably in the range of between 5 and 35% by mass.

The present invention is described below by EXAMPLE. However, it is to be understood that the invention is not intended to be limited to the specific examples.

### [EXAMPLE 1]

An acrylonitrile • styrene-graft-acrylic rubber(AnSt-g-acrylic rubber) was prepared by graft polymerizing acrylonitrile and styrene(20 : 80 mass ratio) to an acrylic rubber, which is a copolymer of n-butylacrylate and butadiene(80 : 20 mass ratio) (EXAMPLE 1).

Fifteen parts by mass of the resulting antistatic agent was added to 100 parts by mass of AS resin, and a resin molded article was manufactured. The resulting resin molded article was kept in a room for six months, after which the situation of dust, speck and the like contamination on said resin molded article was optically observed. The result is shown in Table 1. In Table 1, × shows a situation where dust and the like attached to said molded article, ○ shows a situation where dust and the like attached to said molded article in a relatively small amount.

For COMPARISON, the situations of dust and the like contamination on resin molded articles to which an acrylonitrile • styrene-graft-butadiene rubber(AnSt-g-butadiene rubber) in which acrylonitrile and styrene are graft-polymerized to a butadiene rubber(COMPARISON 1) and an acrylonitrile•styrene-graft-ethylene-propylene-diene rubber (AnSt-g-EPDM) in which acrylonitrile and styrene are graft-polymerized to an ethylene-propylene-diene rubber (EPDM) (COMPARISON 2) were each added, were also observed under the same conditions as in EXAMPLE 1. The results are shown in Table 1.

**(Table 1)**

| | Antistatic agent | Objective resin | Situation of dust and the like contamination |
|---|---|---|---|
| Example 1 | AnSt-g-Acrylic rubber | AS | ○ |
| Comparison 1 | AnSt-g-butadiene rubber | AS | × |
| Comparison 2 | AnSt-g-EPR | AS | × |

It was recognized that said resin molded article in which AuSt-g-acrylic rubber was added to AS resin (AAS resin molded article) showed better antistatic properties than said resin molded articles in which AnSt-g-butadiene rubber and AuSt-G-EPR were each added to AS resin (ABS resin molded article, AES resin molded article).

### [EXAMPLE 2]

Styrene-graft-acrylic rubber (St-g-acrylic rubber) was prepared by graft polymerizing styrene to an acrylic rubber, which is a copolymer of n-butylacrylate and acrylic acid(99 : 1 mass ratio)(EXAMPLE 2).

Ten parts by mass of the resulting antistatic agent was added to 100 parts by mass of PS and PPE respectively, to manufacture resin molded articles. The resulting resin molded articles were each kept in a room for six months, after which, the situations of dust, speck, and the like contamination, were optically observed. The result is shown in Table 2. In Table 2, × shows a situation where dust and the like attached to said molded articles, while ○ shows a situation where dust and the like attached to said molded articles in a relatively small amount. For COMPARISONS, the situations of dust and the like contamination on resin molded articles to which a styrene graft-butadiene rubber(St-g-butadiene rubber) (COMPARISON 3) in which a styrene is graft polymerized to a butadiene rubber, and a styrene-g-graft-ethylene propylene rubber(St-g-EPR) (COMPARISON 4) in which styrene is graft polymerized to an ethylene propylene•rubber were each added, were optically observed under the same conditions as in EXAMPLE 2. The results are shown in Table 2.

**(Table 2)**

| | Antistatic agent | Objective resin | situation of dust and the like contamination |
|---|---|---|---|
| Example 2 | St-g-Acrylic rubber | PS | ○ |
| | St-g-Acrylic rubber | PPE | ○ |
| Comparison 3 | St-g-butadiene rubber | PS | × |
| | St-g-butadiene rubber | PPE | × |
| Comparison 4 | St-g-EPR | PS | × |
| | St-g-EPR | PPE | × |

It was recognized that HIPS and modified PPE resin molded articles, to each of which St-g-acrylic rubber was added, each have superior antistatic properties to resin molded articles in which St-g-butadiene rubber and St-g-EPR were added respectively.

Further, it was confirmed that in a case where the acrylic rubber content in said antistatic agent was increased from 10% to 20%, the amount of dust and the like contamination was smaller as compared with the case of the 10% addition.

### [EXAMPLE 3]

A paint A containing a styrene modified acrylic resin as its vehicle, a paint B containing CAB, and a paint C containing NC, were each coated on one side of an ABS molded article, having a size of 250mm(W) × 250mm(L) × 2mm(thickness), each thickness being 15µm. The resulting molded articles with coated paints A, B, and C were each kept in a room for six months, after which the situations of dust, speck, and the like contamination on said molded articles were optically observed, to confirm that a comparatively small amount of dust and the like attached to said molded articles with coated paints A, B, and C, in comparison with ABS molded article being uncoated, (Evaluated as ┌○┘ ) for each molded articles coated with paints A,B, and C.

### [Reference 1]

Resin pellets were manufactured by compounding 20% by mass of AnSt-g-acrylic rubber of EXAMPLE 1 in AS resin, melting and mixing the resulting compound, and then pelletizing it. The resulting resin pellets were held in the heating cylinder of the injection molding machine at 250°C for one hour to exert thermal stress, after which the impact strength of said resin on which said thermal stress was exerted was determined.

As a result, assuming that the Izod impact strength of the virgin resin was 100, the Izod impact strength of said resin on which the thermal stress was exerted was 97 as a relative value, confirming that said resin has high heat stability, and said resin can be recycled repeatedly.

Thermal stress was exerted on ABS resin the same as described above, and in this case, the relative value of the Izod impact strength decreased to 46; ABS resin, containing 20% by mass of polyether ester amide as a hydrophilic polymer, which is a commercial antistatic agent (PELESTAT NC 6321(trade name), SANYO CHEMICAL, INDUSTRIES, Ltd.) had thermal stress exerted on it at 259°C for one hour, and its Izod impact strength decreased to 19; and a resin prepared by adding 20% by mass of AnSt-g-acrylic rubber to said AS resin, then melting and mixing it, and adding 20% by mass of PELESTAT NC 6321, had thermal stress exerted on it the same as described above, and in this case, the relative value of its Izod impact strength decreased to 21. From these results, it was comfirmed that in a case where PELESTAT NC 6321 is added to a resin having good recycling properties (a resin containing AnSt-g-acrylic rubber), the heat stability of the resulting resin degrades, so that a resin to which polyether ester amide is added, to give it permanent antistatic properties, has poor recycling properties.

About Commercial resins, PALEL (trade name, Toray) and ADION (trade name, A&M STYRENE STYREME Co.) to which polyether ester amide is added, to give them permanent antistatic properties, the same heating and melting test was performed, and as a result, a remarkable degradation in the physical properties of each resin was recognized, showing poor recyclability

### [REFERENCE 2]

Molded articles coated with paint A, paint B, and paint C in EXAMPLE 3 were each smashed, and pelletized, and re-molded to confirm the effect the of coating films contamination, and as a result, recycled resins, in which paint A and paint B, are each contaminated, have relative values of Izod impact strength 98 for paint A, and 97 for paint B respectively, demonstrating that each recycled resin has excellent heat stability.

About paint C, its relative value of Izod impact strength is 94, but discoloration (browning) of said resin was confirmed, proving that Nitrocellulose(NC) has poor heat stability.

### [EXAMPLE 4]

Molded articles respectively made of polymer alloys PET/PS=50/50,HIPS/PET=50/50, PC/ABS=75/25, PC/PS=75/25,EVA/ABS=70/30, EEA/ABS=80/20, PS/PELPRENE P-150-B (trade name)=40/60, and PA-6/PPE=60/40, and further molded articles made of PC,PA-6, PET, and PBT were kept in a room for six months the same as in EXAMPLE 1, after which the situations of dust, speck, and the like contamination were optically observed for each molded article. As a result of this observation, a relatively smaller amount of dust and the like contaminated each molded article, in comparison with ABS and HIPS into which no hydrophilic resins were blended, so that it was evaluated as ┌○┘.

### [EXAMPLE 5]

Twenty % by mass of an antistatic agent consisting of an aromatic condensed phosphoric acid ester (PX-200 (trade name), DAIHACHI CHEMICAL INDUSTRY Co., Ltd.) was added to both ABS and HIPS, and resin molded articles were manufactured. The resulting resin molded articles were each kept in a room for six months, the same as in EXAMPLE 1, and the situations of dust, speck, and the like contamination for each resin molded article were optically observed.

For COMPARISONS resin molded articles made of only ABS and only HIPS were each kept in a room for six months, the same as described above to observe optically the situations of dust, speck, and the like contamination for each resin molded article. As a result of the observations it was recognized that a relatively smaller amount of dust and the like attached to the molded articles containing any kind of antistatic agent, in comparison with the molded articles containing no antistatic agent.

### [EXAMPLE 6]

Fifteen % by mass of an antistatic agent, tetrabromobisphenol A derivative (Fire Guard, 3100, TEIJIN CHEMICALS Ltd.), was added to AS resin and PS resin respectively, to manufacture resin molded articles. The resulting resin molded articles were each kept in a room for six months, the same as in EXAMPLE 1, after which the situations of dust, speck, and the like contamination on each molded article were optically observed. For COMPARISONS resin molded articles made of only AS resin and only PS resin were each kept in a room for six months the same as described above, to observe optically the situations of dust, speck and the like contamination on each molded article.

As a result of the observations, a relatively smaller amount of dust, specks, and the like attached to said molded articles containing an antistatic agent, in comparison with said molded articles made of AS resin without an antistatic agent, and PS resin also without an antistatic agent.

### [EXAMPLE 7]

Fifteen % by mass of an antistatic agent, bromide epoxy (SR-T 20000, SAKAMOTO YAKUHIN KOGYO CO., LTD.), was added to both AS resin and PS resin, and resin molded articles were manufactured. The resulting resin molded articles were each kept in a room for six months, the same as in EXAMPLE 1, after which the situations of dust, speck and the like contamination on each molded article were optically observed. For COMPARISONS, resin molded articles made of only AS resin and only PS resin were each kept in a room for six months, the same as described above, to observe the situations of dust speck, and the like contamination on each resin molded article.

A comparatively smaller amount of dust and the like attached to any molded article containing an antistatic agent, in comparison with molded articles made of AS resin without an antistatic agent, and PS resin also without an antistatic agent.

### [EXAMPLE 8]

The cabinet of a xerographic machine (PPC) made of ABC resin (CYCOLAC, XFJ-5, UMG ABS Ltd.) was smashed and washed by a flushing crusher (Plassholie, TANAKA Ltd.) to obtain smashed material, said xerographic machine being withdrawn from the market, 2% by mass or 4% by mass of AnSt-g-acrylic rubber were each added to the resulting smashed material, and recycled pellets were manufactured by melting and mixing in a twin-screw extruder (TECHNOBEL). Using the resulting recycled pellets, molded articles were respectively manufactured by injection molding.

On the other hand, 12 parts by mass parts of an antistatic agent (PX-200) was added to 100 parts by mass of said recycled pellets, after which pellets were manufactured by melting and mixing. A molded article was manufactured by injection molding the resulting pellets. The amount of dust and the like contamination on each molded article was estimated. The results are shown in Table 3.

**(Table 3)**

| | | | | |
|---|---|---|---|---|
| Additional amount of AnSt-g-AR (% by mass) | 2 | 4 | 2 | 4 |
| PX-200 (parts by mass) | 0 | 0 | 12 | 12 |
| Evaluation of dust adhesion (after being kept for six months in a room) | × | × | ○ | ○ |

### [EXAMPLE 9]

Using an acrylonitril • estyrene-graft-ethylene propylene diene rubber (AnSt-g-EPDM wherein DM is DCP, ethylene-propylene ratio = 75 : 26) instead of the AnSt-g-acrylic rubber of EXAMPLE 8, an evaluation test the same as in EXAMPLE 8 was performed. The results are shown in Table 4. Further the results concerning a molded article made of only recycled ABS are also described in Table 4.

**(Table 4)**

| | | | | | |
|---|---|---|---|---|---|
| Additional amount of AnSt-g-EPDM (% by mass) | 2 | 4 | 2 | 4 | 0 |
| PX-200 (parts by mass) | 0 | 0 | 12 | 12 | 0 |
| Evaluation of dust adhesion (after being kept for six months in a room) | × | × | ○ | ○ | × |

### [EXAMPLE 10]

The St-g-acrylic rubber of EXAMPLE 2, being 28.6% by mass, was added to the

PS resin pellets, to produce HIPS pellets.

Further, 8 to 12 parts by mass of an antistatic agent (PX-200) was mixed into 100 parts by mass of the resulting HiPS pellets, and a molded article was manufactured by heating and melting in said twin screw extruder. The adhesion of dust and the like on each molded article was evaluated. The results are shown in Table 5.

**(Table 5)**

| | | | | |
|---|---|---|---|---|
| PX-200 (parts by mass) | 0 | 8 | 10 | 12 |
| Evaluation of dust adhesion (after being kept for six months in the room) | ○ | ○ | ○ | ○ |

### [EXAMPLE 11]

Thirty five % by mass of PET resin pellets were mixed into the ABS resin pellets of EXAMPLE 8, and a molded article A was manufactured by molding, using said mold from EXAMPLE 3. The resulting molded article A was coated with paint A (dry film thickness 5 µm) and then with paint B (dry film thickness 5 µm), paints A and B being used in EXAMPLE 3, and a coated molded article B was manufactured.

The resulting coated molded article B was smashed, pelletized and remolded, to manufacture a molded article C. Paint D (35% by mass of CAB being added to paint A to prepare paint D) was coated on the resulting molded article C to manufacture a molded article D.

The amount of dust and the like contamination on each molded article A, B, C, and D was evaluated after said molded articles had been kept in a room for six months. For a COMPARISON, the amount of dust and the like contamination on a molded article made of only ABS resin was also evaluated.

The amount of dust and the like contamination on each molded article A, B, C, and D was comparatively smaller, when compared with that of said molded article made of only ABS resin, and it was recognized that said molded articles A, B, C, and D have an antistatic effect. The reasons why the above described results were obtained, are considered to be because of the existence of PET resin in molded article A, the existence of CAB in the coating film in molded article B, the existence of PET and CAB in molded article C, and the existence of CAB in the coating film in molded article D.

### [EXAMPLE 12]

Five % by mass of AnSt-g-acrylic rubber of EXAMPLE 1 was added and mixed into said recycled material (ABS resin) of EXAMPLE 8, and further, an antistatic agent (PX-200) was added in amounts of 0, 8, 10, 12, and 14% by mass respectively and the resulting mixtures were melted and conbined to manufacture pellets.

The resulting pellets were respectively molded to manufacture molded articles. The amount of dust and the like contamination on each molded article after being kept in a room for six months was evaluated. The results are shown in Table 6.

**(Table 6)**

| | Recycled material (ABS) | AnSt-g-AR, (Added at 5% by mass) | | | | |
|---|---|---|---|---|---|---|
| PX-200 (parts by mass) | 0 | 0 | 8 | 10 | 12 | 14 |
| Dust adhesion (after being kept for six months in a room) | × | Δ | ○ | ○ | ○ | ○ |

### [EXAMPLE 13]

Using the AnSt-g-EPDM of EXAMPLE 1 instead of the AnSt-g-acrylic rubber of EXAMPLE 12, molded articles were manufactured to be the same as in EXAMPLE 12, in order to evaluate the mount of dust and the like contamination on each molded article. The results are shown in Table 7.

**(Table 7)**

| | Recycled material (ABS) | AnSt-g-EPSM (Added at 5% by mass) | | | | |
|---|---|---|---|---|---|---|
| PX-200 (parts by mass) | 0 | 0 | 8 | 10 | 12 | 14 |
| Dust adhesion (after being kept for six months in a room) | × | × | ○ | ○ | ○ | ○ |

### [EXAMPLE 14]

Forty parts by mass parts of the AnSt-g-acrylic rubber of EXAMPLE 1, 20 parts by mass of AS resin, and 40 parts by mass of PS 200 were melted and strongly kneaded by an external heating type kneader, and the resulting mixture was pelletized to prepare a master batch A, of antistatic agent.

A master batch B, was prepared by using a mixture of AnSt-g-acrylic rubber/AS/PX-200=50/15/35 using the same method as described above.

Twenty parts by mass parts of said master batches A and B were both added to said recycled material of EXAMPLE 8, and after molding, the resulting molded articles were each kept in a room for six months, after which the amount of dust and the like contamination on each molded article was evaluated. The amount of dust and the like contamination on said molded articles to which master batches A and B were each added was clearly small, and evaluated as ┌○┘ (The evaluation standard is the same as in the above described EXAMPLES).

### [EXAMPLE 15]

Using the same composition, with the exception that St-g-acrylic rubber was used instead of the AnSt-g-acrylic rubber of EXAMPLE 14, the same evaluation as in EXAMPLE 14 was performed. The amount of dust and the like contamination was small, the same as in EXAMPLE 14, and evaluated as ┌○┘.

### INDUSTRIAL UTILITY

Said antistatic agent of the present invention is usable in resin for molding or for paint.

## Claims

1. An antistatic agent made of one or a mixture of two or more kinds selected from a group consisting of a graft copolymer, whose main chain is an acrylic rubber and graft chain is of a polymer chain mainly consisting of a styrene group monomer or a copolymer chain mainly consisting of a styrene group monomer and nitrile group monomer, a block copolymer consisting of acrylic rubber block(s) and styrene group polymer block(s), or styrene group and nitrile group copolymer block(s), a cellulose derivative except nitrocellulose, a phosphoric ester compound, polyester, polycarbonate, phthalic acid ester, and adipic acid ester.

2. An antistatic agent according to Claim 1, wherein said antistatic agent is added to thermoplastic resin having aromatic ring(s).

3. An antistatic agent according to Claim 2 wherein said thermoplastic resin having aromatic ring(s) is a styrene group resin, polyester resin, polyphenylene ether resin or polycarbonate resin.

4. A synthetic resin used in paint or for molding containing 5 to 50% by mass of a graft copolymer, whose main chain is an acrylic rubber and graft chain is of a polymer chain mainly consisting of a styrene group monomer or a copolymer chain mainly consisting of a styrene group monomer and nitrile group monomer as an antistatic agent.

5. A synthetic resin compound used in paint or for molding containing 5 to 50% by mass of a block copolymer containing acrylic rubber block(s), polymer block(s) mainly consisting of a styrene group monomer or copolymer block(s) mainly consisting of a styren group monomer and nitrile group monomer as antistatic agent.

6. A synthetic resin compound used in paint or for molding containing 5% by mass of cellulose derivative except nitrocellulose as an antistatic agent.

7. A synthetic resin compound used in paint or for molding containing 5 to 35% by mass of a phosphoric ester compound as an antistatic agent.

8. A synthetic resin compound used in paint or for molding, containing 5 to 35% by mass of an antistatic agent made of a mixture of a graft copolymer, whose main chain is an acrylic rubber and graft chain is of a polymer chain mainly consisting of a styrene group monomer or a copolymer chain mainly consisting of a styrene group monomer and nitrile group monomer, and phosphoric ester, wherein said graft copolymer and said phosphoric ester are mixed into a mass ratio in the range of between 10 : 90 and 50 : 50.

9. A synthetic resin compound, used in paint or for molding, containing 5 to 35% by mass of an antistatic agent made of a mixture of a block copolymer consisting of acrylic rubber block(s), and polymer block(s) mainly consisting of a styrene group monomer or copolymer blocks mainly consisting of a styrene group monomer and nitrile group monomer, and phosphoric ester, wherein said block copolymer and said phosphoric ester are mixed in a mass ratio in the range of between of 10 : 90 and 50 : 50.

10. A synthetic resin compound used in paint or for molding according to any of Claims 4 to 9 wherein said synthetic resin is thermoplastic resin having aromatic ring(s).

11. A synthetic resin compound used in paint or for molding according to Claim 10 wherein said thermoplastic resin having aromatic ring(s) is a styrene group resin, polyester resin, polyphenylene ether resin or polycarbonate resin.
